Europäisches Patentamt

European Patent Office

Office européen des brevets

(11) Veröffentlichungsnummer: **0 329 106**
**A2**

## (12) EUROPÄISCHE PATENTANMELDUNG

(21) Anmeldenummer: 89102594.2

(22) Anmeldetag: 15.02.89

(51) Int. Cl.⁴: **G01M 13/04**

(30) Priorität: 15.02.88 DE 3804720

(43) Veröffentlichungstag der Anmeldung:
23.08.89 Patentblatt 89/34

(84) Benannte Vertragsstaaten:
**BE DE FR GB IT NL SE**

(71) Anmelder: **Siemens Aktiengesellschaft**
**Wittelsbacherplatz 2**
**D-8000 München 2(DE)**

(72) Erfinder: **Lattka, Alexander, Dr.**
**Lassallestrasse 26**
**D-7500 Karlsruhe 21(DE)**
Erfinder: **Utz, Wolfgang**
**Nansenstrasse 12**
**D-6744 Kandel(DE)**

(54) **Verfahren zur Diagnose von mechanischen Eigenschaften der rotierenden Teile wälzgelagerter Maschinen.**

(57) Die Erfindung betrifft ein Verfahren zur Diagnose von mechanischen Eigenschaften der rotierenden Teile wälzgelagerter Maschinen, die hinsichtlich des Zustandes der Wälzlager überwacht werden müssen. Hierbei wird ein Schwingungssignal an den rotierenden Teilen der Maschine detektiert und nach Erfassung der positiven und negativen Spitzenwerte in definierten Zeitintervallen meßtechnisch aufbereitet und ausgewertet. Um mit einer schnellen und zuverlässigen Methode Wälzlagerschäden diagnostizieren zu können, wird eine erste Anzahl der Zeitintervalle zum Zeitpunkt n0 gestartet und die zweite Anzahl zum Zeitpunkt n0 = Gamma . x gestartet und aus dem arithmetischen Gesamtmittelwert aller ermittelten Mittelwerte ein Bewertungsfaktor für die mechanischen Eigenschaften der Maschine ermittelt.
Die Erfindung ist bei der Überwachung von rotierenden Teilen in Maschinen anwendbar.

FIG 2

EP 0 329 106 A2

## Verfahren zur Diagnose von mechanischen Eigenschaften der rotierenden Teile wälzgelagerter Maschinen

### Technisches Gebiet

Die Erfindung betrifft ein Verfahren zur Diagnose von mechanischen Eigenschaften der rotierenden Teile wälzgelagerter Maschinen, die hinsichtlich des Zustandes der Wälzlager überwacht werden müssen.

### Stand der Technik

Bei bekannten Verfahren dieser Art (DE-OS 33 14 005) wird ein Schwingungssignal an den rotierenden Teilen der Maschine detektiert und nach Erfassung der positiven und negativen Spitzenwerte in definierten Zeitintervallen meßtechnisch aufbereitet und ausgewertet.

### Darstellung der Erfindung

Der Erfindung liegt die Aufgabe zugrunde, eine schnelle und zuverlässige Methode anzugeben, aus den detektierten Beschleunigungssignalen der rotierenden Teile durch Wälzlagerschäden hervorgerufene Schwingungen zu diagnostizieren.

Zur Lösung dieser Aufgabe wird bei einem Verfahren der angegebenen Art aus einer Anzahl x von Meßpunkten des gefilterten Beschleunigungssignals in einem Zeitintervall jeweils aus dem positiven Spitzenwert und dem negativen Spitzenwert der arithmetische Mittelwert errechnet und elektronisch gespeichert. Es wird eine Anzahl von Zeitintervallen benutzt, wobei eine erste Anzahl zum Zeitpunkt $n_0$ gestartet wird und die zweite Anzahl zum Zeitpunkt $n_0$ = Gamma . x gestartet wird und aus dem arithmetischen Gesamtmittelwert aller ermittelten Mittelwerte ein Bewertungsfaktor für die mechanischen Eigenschaften der Maschine ermittelt wird.

Bei der erfindungsgemäßen Methode wird in vorteilhafter Weise erreicht, daß in festgelegten Meßzeiten eine sichere Analyse der Schwingungssignale an den rotierenden Teilen vorgenommen werden kann, da die rechnerische Auswertung äußerst einfach ist und damit in relativ kurzen Rechenzeiten vorgenommen werden kann. Durch die einfache Verschiebung der Zeitintervalle in einer zweiten Hälfte der Meßzeit um einen vorgegebenen Faktor Gamma, der hinsichtlich der Rotationsfrequenz der drehenden Teile in der Maschine optimiert ist, wird eine sichere Erkennung von Störschwingungen ermöglicht. Insbesondere durch wiederholte Messungen nach bestimmten Betriebszeiten der Maschine können Veränderungen im Schwingungsverhalten dadurch leicht erkannt werden, daß die systembedingten Schwingungen von vornherein das Meßergebnis nicht verfälschen und nur durch Fehler verursachte Schwingungen aufgrund der optimierten Verschiebung der Zeitintervalle ermittelt werden.

### Kurze Beschreibung der Zeichnung

Die Erfindung wird anhand der Figuren erläutert, wobei
Figur 1 ein Signalverlauf der detektierten Schwingungssignale und
Figur 2 ein Schaubild über die Zeitintervalle in der Meßzeit darstellen.

### Bester Weg zur Ausführung der Erfindung

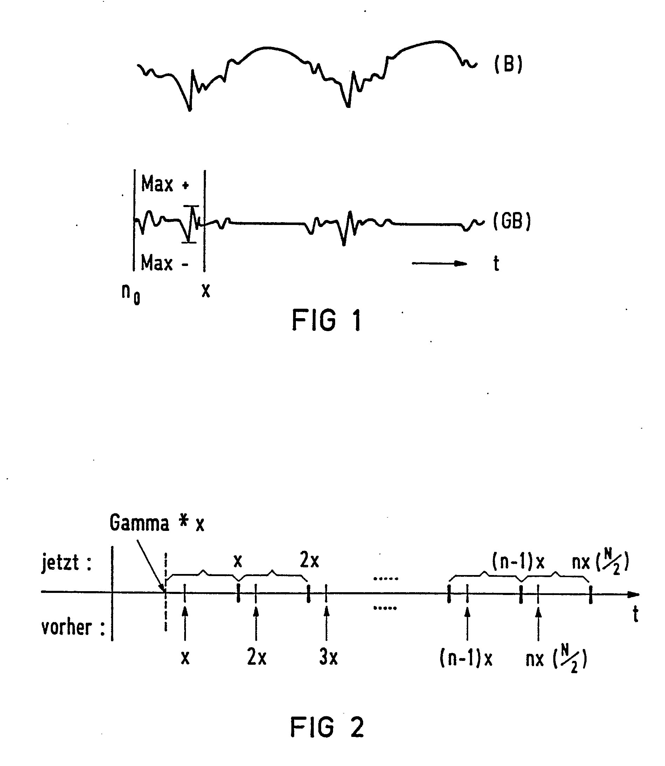

In der Figur 1 ist zunächst der Verlauf eines Beschleunigungssignals B dargestellt, welches, leicht erkennbar, von der systembedingten Rotationsschwingung der Maschine überlagert ist. Weiterhin sind auch höherfrequente Stoßwellen hier erkennbar, die von fehlerbehafteten Wälzvorgängen in einem defekten Wälzlager hervorgerufen werden können. Im unteren Teil der Figur 1 ist ein gefiltertes Beschleunigungssignal GB dargestellt, welches in einem schmalbandigen Bandpaßfilter von hoch-und tieffrequenten Anteilen getrennt worden ist und somit sich zur Auswertung hinsichtlich störender Stoßwellen hervorragend eignet.

Im Signalverlauf des gefilterten Beschleunigungssignals GB über der Zeit t ist, ausgehend vom Zeitpunkt n0, ein Zeitintervall von x Meßpunkten angegeben. Innerhalb dieses Zeitintervalls treten ein negativer Maximalwert Max - und ein positiver Maximalwert Max + auf.

Zur Filterung können beispielsweise digitale Filter mit einer Tief- und Hochpaßflanke von 80 dB/Dekade benutzt werden. Die Anzahl x der Meßpunkte in den Intervallen wird aus der Beziehung

x = Td / T     (1)

hergeleitet, wobei T die Abtastperiode in Millisekunden und

Td = (1 / fd) . 1000 (ms)     (2)

ebenfalls in Millisekunden ist.

Aus den in den Zeitintervallen ermittelten positiven und negativen Spitzenwerten Max +, Max - werden die arithmetischen Mittelwerte nach

$$U_i = \frac{|Max\ +| + |Max\ -|}{2} \qquad i = 1 \ldots n \qquad (3)$$

berechnet. Diese arithmetischen Mittelwerte $U_i$ werden zur späteren Ermittlung des Gesamtergebnisses elektronisch abgespeichert.

In der Figur 2 sind eine Anzahl N von Zeitintervallen über der Zeit t dargestellt, wobei unterhalb der Zeitachse eine erste Hälfte (N/2) von Zeitintervallen dargestellt ist und oberhalb der Zeitachse eine zweite Hälfte (N/2) von Zeitintervallen dargestellt ist, die jeweils um einen Faktor Gamma . x gegenüber der ersten Hälfte verschoben sind. Aus jedem der dargestellten Zeitintervalle werden in der beschriebenen Weise der positive und der negative Spitzenwert Max +, Max - ermittelt und hieraus die einzelnen Mittelwerte $U_i$ berechnet. Ein Bewertungsfaktor SBV für die mechanischen Eigenschaften der Maschine ergibt sich nun aus der Beziehung

$$SBV - Faktor = \frac{1}{N} \sum_{i=1}^{N} U_i \qquad (4)$$

wobei N die Gesamtzahl aller Zeitintervalle ist.

Gewerbliche Anwendbarkeit

Die Ermittlung des Bewertungsfaktors SBV während der Gesamtlebenslaufzeit der rotierenden Teile einer zu diagnostizierenden Maschine gibt somit Aufschluß über die Funktionstüchtigkeit des betreffenden Wälzlagers in der Maschine; ein Anstieg des Bewertungsfaktors SBV bedeutet hierbei eine Verschlechterung des Wälzlagerzustandes und somit die Notwendigkeit einer Instandsetzung.

**Ansprüche**

Verfahren zur Diagnose von mechanischen Eigenschaften der rotierenden Teile wälzgelagerter Maschinen, bei dem
- ein Beschleunigungssignal (B) der rotierenden Teile detektiert wird,
- ein Schwingungsfrequenzspektrum oberhalb der Rotationsfrequenz (fd) aus dem Beschleunigungssignal (B) herausgefiltert wird,
- aus einer Anzahl x von Meßpunkten des gefilterten Beschleunigungssignals (GB) in einem Zeitintervall jeweils der positive Spitzenwert (Max +) und der negative Spitzenwert (Max -) ermittelt und der daraus errechnete arithmetische Mittelwert ($U_i$) elektronisch gespeichert wird,
- eine Anzahl (N) von Zeitintervallen benutzt wird, wobei eine erste Anzahl (N/2) zum Zeitpunkt n0 gestartet wird und die zweite Anzahl (N/2) zum Zeitpunkt n0 = Gamma . x gestartet wird, und bei dem
- aus dem arithmetischen Gesamtmittelwert aller ermittelten Mittelwerte ($U_i$) ein Bewertungsfaktor (SBV) für die mechanischen Eigenschaften der Maschine ermittelt wird.

3

88 P 4 4 0 8 E

EP 0 329 106 A2

FIG 1

FIG 2